# EUROPEAN PATENT SPECIFICATION

(11) **EP 0 406 392 B1**
(45) Date of publication and mention of the grant of the patent: **14.04.1993**
(21) Application number: 90901917.6
(22) Date of filing: 10.01.1990
(51) Int. Cl.: A01M 21/04

(54) **APPARATUS FOR PLANT FLAMING BY MEANS OF LIQUEFIED PETROLEUM GAS**
VORRICHTUNG ZUM ABFLAMMEN VON PFLANZEN MITTELS FLÜSSIGGAS
APPAREIL DE BRULAGE DE PLANTES PAR GAZ DE PETROLE LIQUEFIE

(30) Priority: 25.01.1989 SE 8900263
(43) Date of publication of application: 09.01.1991
(73) Proprietor: PRIMUS SVENSKA AB, 127 26 Skärholmen (SE)
(72) Inventor: THÖRNER, Per, S-642 00 Flen (SE)
(74) Representative: Stürmer, Gerhard
(86) International application number: SE9000016
(87) International publication number: WO9008465

(56) References cited:
- US-A- 2 188 072
- US-A- 2 531 741

## Description

The invention relates to an apparatus for plant flaming by means of liquefied petroleum gas such as is known from US-A-2 531 741. Such an apparatus has a controllable liquefied petroleum gas evaporator, a liquefied petroleum gas container, and is adapted to be supported by a medium-cooled vehicle by means of mechanical couplings.

As professionals and consumers are becoming increasingly aware of the harmful effects of using biocides in agriculture, there is an increasing need of being able to replace the biocides by non-toxic alternatives.

A typical example in which biocides are used to a great extent is the growing of potatoes. Here use is made of biocides such as Reglone whose active substance is Diquat, for controlling leaf fungus, and sulphuric acid for killing the potato haulm. Moreover, herbicides are used to kill weeds, for example in growing root-crops such as carrots.

The easiest way of replacing biocides is to return to mechanical killing of weeds and haulm. However, in practice it is in many cases difficult to achieve satisfactory results at a reasonable cost by means of mechanical methods only. Other solutions are therefore necessary.

A well-known technique is the using of fire, so-called flame cultivation or flaming. In flaming, the undesired vegetation is heated to such a temperature that the cell membranes burst and/or the protein coagulates.

In rational farming, machines are being used, and therefore the flaming apparatus are in most cases towed by a vehicle, generally a tractor.

A considerable problem in flaming is the supply of fuel. To provide flaming which is harmless to the environment, liquid fuels such as oil and paraffin should be avoided. On combustion, they cause residual products which can affect the crops. Besides it is difficult to control the combustion. Up to now, the best technique for carrying out flaming is, from the environmental point of view, to use gas-jets.

Since large quantities of natural gas are difficult to store effectively in closed containers, liquefied petroleum gas, propane, butane etc are of course the most preferred fuel for flaming apparatus.

When using liquefied petroleum gas as fuel, there arises however a distinct problem, viz. the evaporation of the liquefied petroleum gas in liquid state. When taking out fairly large amounts of liquefied petroleum gas in gaseous state, evaporation by means of forced supply of heat must, as is well known, be applied since spontaneous evaporation directly in liquefied petroleum gas cylinders cannot take place, while maintaining a reasonably high temperature. In most cases, forced evaporation is effected in a special receptacle, the evaporator.

US patents 2,531,741, 2,546,592 and 2,548,051 disclose methods of evaporating liquefied petroleum gas for flaming apparatus by supplying the evaporator with energy in the form of heat from the exhaust gases of the vehicle. Similar procedures are in principle applied in evaporation of liquefied petroleum gas in vehicles run on liquefied petroleum gas (US-A-2,188,072), while using the excess heat of the internal combustion engine.

The method of employing the exhaust heat of the vehicle suffers from considerable drawbacks. Above all, it is practically impossible to apply this method to vehicles which are not specially designed for flaming purposes, since essential modifications of the exhaust system of the vehicle are required. Moreover, the method makes it necessary to arrange the evaporator in conjunction with the exhaust system, which may require positioning of the evaporator in a manner that is not operationally satisfactory with respect to the flaming apparatus. It will thus be most costly to apply this method to vehicles which are to be used for flaming only periodically or partially. There will also be problems with approvals etc which are conditioned by the modifications in the exhaust system. To render it possible to optimally utilise the flaming technique, it.would be of great value if the flaming apparatus and the evaporator could be quickly and easily mounted on and dismounted from any vehicle whatsoever, without necessitating any essential modifications. As a result, the vehicle can be used for various purposes in addition to the towing of flaming apparatus. Moreover, any vehicle that is available can be used, and thus no new acquisition is necessary.

It is also important that the flaming apparatus and the evaporator can be operated in a safe manner, thereby avoiding any fire or explosion.

The object of the present invention is to obviate the above-mentioned drawbacks while eliminating the above-mentioned shortcomings and satisfying the above requirements. According to the invention, this object is achieved in that the apparatus has been given the features stated in claim 1. The subclaims define suitable embodiments and further developments of the inventive idea.

The invention will now be described with reference to the embodiments shown in the accompanying drawings in which:
Fig. 1 illustrates a tractor and a connectible flaming apparatus,
Fig. 2 illustrates a plate heat exchanger as evaporator,
Fig. 3 shows the fundamental structure of the evaporator, and
Fig. 4 shows how the evaporator is connected to a cab heating system.

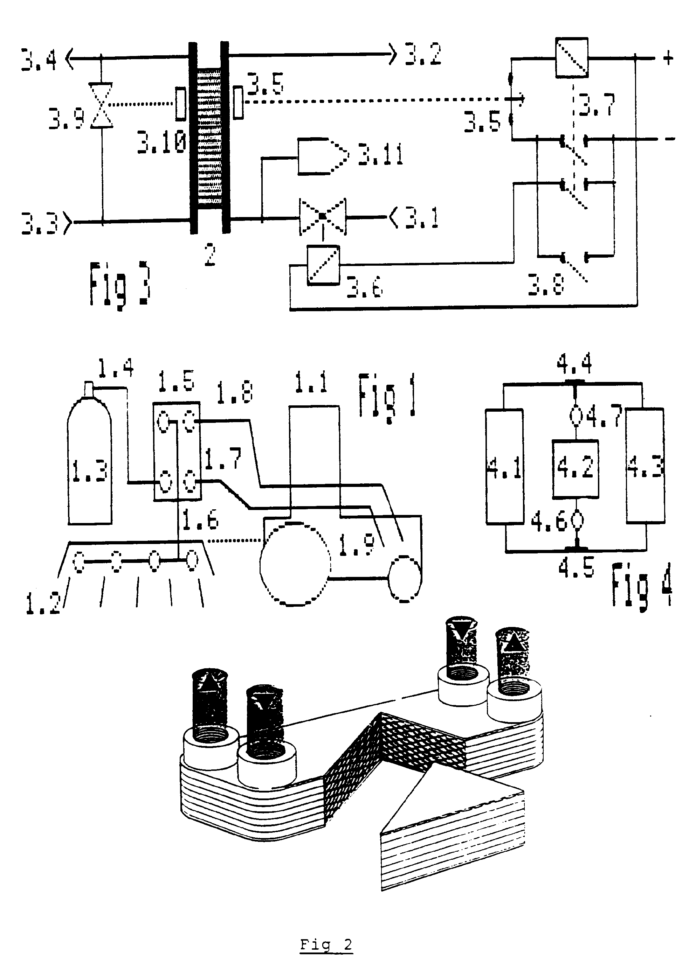

Fig. 1 illustrates a vehicle (tractor) 1.1 which tows a flaming apparatus 1.2. The flaming apparatus 1.2 is supplied with liquefied petroleum gas from the liquefied petroleum gas containers 1.3 delivering liquefied petroleum gas in liquid state 1.4 which is evaporated in the evaporator 1.5. Liquefied petroleum gas in gaseous state 1.6 is then supplied to the flaming apparatus 1.2. The evaporator 1.5 is supplied with energy via the hot water from the cooling system 1.9 of the vehicle in that the inlet 1.7 and the outlet 1.8 of the cooling water coil are closed and the evaporator 1.5 is connected in series with the cooling system of the vehicle. The evaporator, the liquefied petroleum gas container and the flaming apparatus are all positioned in the vicinity of each other, behind the vehicle, at a distance from the vehicle engine.

This technique brings several advantages. Since the cooling water of the vehicle is used, the exhaust system need not be modified. The modification of the cooling water system is easy to effect and involves but insignificant costs. Advantageously, quick couplings can be used which facilitate quick dismounting and mounting of the cooling water coil. The technique means that it will be easy to use vehicles which are only temporarily used for flaming.

The evaporator can readily be arranged in a position where it fits functionally with regard to the liquefied petroleum gas system, i.e. adjacent the liquefied petroleum gas containers and the flaming apparatus. In this way, there is no need for long liquefied petroleum gas conduits for the liquid and the gaseous state, which is favourable from a security point of view.

In some cases it may be favourable to build together the evaporator with the liquefied petroleum gas containers and/or the flaming apparatus, and to be able to quickly connect or disconnect this unit to and from a tractor or some other vehicle by one or more mechanical coupling means.

Since the evaporator is to be light and small so as to allow easy installation and removal, it is of great importance that the evaporator receptacle is made effective. It is also important that for the same reasons only a small amount of water need be used in the evaporator.

The conventional liquefied petroleum gas evaporators that are available are of the pipe heat exchanger type. However, such an evaporator does not satisfy the above-mentioned requirements. Therefore, a new type of liquefied petroleum gas evaporator has been chosen which better fulfils the requirements in the application at issue.

Excellent heat transmission between the water and liquefied petroleum gas sides is a condition for using a small size evaporator with low consumption of water. Further, the evaporator receptacle must be elongate, since the liquefied petroleum gas is in liquid state in the bottom portion of the evaporator and in gaseous state in the upper portion. It has surprisingly appeared that a plate heat exchanger which is available on the market perfectly satisfies the requirements that are made. Fig. 2 illustrates the construction of such a plate heat exchanger. When the plate heat exchanger 2 is used as evaporator, it is disposed vertically as shown in Fig. 3. Liquefied petroleum gas in liquid state 1.4 is supplied to the lower end 3.1 and liquefied petroleum gas in gaseous state 1.6 emerges from the upper end 3.2. Hot water is delivered via a quick coupling 1.7 from the cooling system 1.9 of the vehicle to the lower end 3.3, and cooled water flows out from the upper end 3.4 via a quick coupling 1.8 to the cooling system 1.9.

Fig. 4 illustrates a tractor engine 4.1 which via two T-pieces 4.4, 4.5 is connected to the radiator and the cab heating system of the tractor which are designated 4.3. Further, a quick coupling 4.7 is connected to the T-piece 4.4 and another quick coupling 4.6 to the T-piece 4.5, both couplings being connected to the evaporator 4.2. The evaporator 4.2 corresponds to the entire object in Fig. 3 and comprises the connections 3.3 and 3.4 for cooling water and recycled water. Owing to the quick couplings 4.6 and 4.7 which are self-locking when not connected, the flaming apparatus can be most easily and quickly connected to and disconnected from the tractor regarding the supply of heat energy in the form of hot cooling water. The mechanical couplings for the flaming apparatus on the tractor can be of conventional design and thus need not be described in detail, since the design thereof is not essential to the invention.

Practical experiments at the University of Agriculture in Uppsala prove that the apparatus according to the invention functions excellently in practical operation in agricultural contexts, e.g. for killing haulm in potato cultivation. The capacity of the evaporator is extremely high, about 60-80 kg/h. The taking out of heat from the cooling water does not interfere with the function of the vehicle.

In all liquefied petroleum gas evaporators it is extremely important to prevent liquefied petroleum gas in liquid state from emerging on the gaseous phase side of the evaporator (incomplete evaporation). Since liquefied petroleum gas in liquid state contains about 200 times more energy per unit of volume than liquefied petroleum gas in gaseous state, the emergence of liquid is a most serious occurrence, which means that the gas burner flames up with great force.

In order to prevent liquid from emerging, the invention suggests that the temperature of outlet liquefied petroleum gas and outlet water is monitored. When the evaporator starts, the outlet water must have reached a given temperature. If, during operation, the outlet liquefied petroleum gas reaches a temperaure below a given value which is dependent on the operating pressure and the temperature of the inlet liquefied petroleum gas, the supply of liquefied petroleum gas in liquid state is cut off.

The evaporator 1.5 therefore is provided with a thermostat 3.5 and a solenoid valve 3.6 by which the supply of liquefied petroleum gas in liquid state 1.4 to the heat exchanger 2 is cut off as the temperature sensed by the thermostat 3.5 falls below a given value, in that the current to the solenoid valve is switched off 3.7. To open the solenoid valve, the button 3.8 must then be operated manually, which ensures that the reason for the insufficient temperature is checked, before the evaporator 1.5 is started again.

The construction of the evaporator is also decisive of the possibilities of preventing liquid from emerging. Since the distance between the plates in the heat ex-changer is so short and since the liquefied petroleum gas during evaporation flows in a curved path, liquid droplets which are released as the liquefied petroleum gas in liquid state boils in the evaporator, will be collected and evaporated by a comfortable margin, before they reach the evaporator outlet. If the heat exchanger is connected according to the counter-flow principle, the distribution of temperatures can further be optimised.

Since the evaporator is supplied with water from the cooling system of the vehicle, there is no temperature control of the water heating the evaporator. This means that there may be a critical pressure increase in the evaporator, if liquefied petroleum gas is enclosed in the evaporator by closing of the inlet and outlet valves.

To avoid such pressure increase, the evaporator 1.5 is furnished with a shunt valve 3.9 and a thermostat 3.10 which provide that parts of the inlet 1.7 and the outlet 1.8 flow of water are conducted past the heat exchanger 2, if the water temperature is too high (excess temperature protection). By this technique, the flow of water through the cooling system of the vehicle is not affected.

Furthermore, the evaporator receptacle is in conventional manner provided with an excess pressure valve 3.11.

The invention is not restricted to the embodiments described above but can be modified within the scope of the appended claims.

## Claims

1. Flaming apparatus (1.2) having a controllable liquefied petroleum gas evaporator (1.5) and a liquefied petroleum gas container (1.3),
- the evaporator being controllable and connected to the cooling system of a medium-cooled vehicle (1.1) such that the evaporation heat for forced and controllable transformation of liquefied petroleum gas in liquid state to the gaseous state is extracted from the cooling system;
- the apparatus being adapted to be towed or supported by the vehicle by means of mechanical couplings;
- the evaporator being connectible and disconnectible from the cooling system by means of couplings;
- a thermostat (3.5) and a solenoid valve (3.6) being provided for controlling the evaporator, the solenoid valve acting to cut off the supply of liquefied petroleum gas in liquid state from the liquefied petroleum gas container to the heat exchanger if the evaporating temperature is not sufficiently high.

2. The flaming apparatus as claimed in claim 1, **characterised** in that said evaporator (1.5) is a plate heat exchanger (2) which is connectible to and disconnectible from the cooling system (1.9) of said vehicle.

3. The flaming apparatus as claimed in claim 2, **characterised** in that said evaporator is designed such that while evaporating, the liquefied petroleum gas flows inside the heat exchanger (2) in a curved path.

4. The flaming apparatus as claimed in claim 2 or 3, **characterised** in that said heat exchanger (2) is connected according to the counter-flow principle.

5. The flaming apparatus as claimed in claims 1-4, **characterised** in that a thermostat (3.10) and a shunt valve (3.9) are provided which prevent the heat exchanger (2) from obtaining a temperature exceeding a preset limit value, in that part of the cooling water of the vehicle (1.1) is conducted past the heat exchanger (2), when necessary.

6. The flaming apparatus as claimed in some of claims 1-5, **characterised** in that said evaporator (1.5) is built together with a holder for the liquefied petroleum gas container (1.4).

7. The flaming apparatus as claimed in one or more of claims 1-6, **characterised** in that said evaporator (1.5) is built together with said flaming apparatus (1.2).

## Patentansprüche

1. Vorrichtung (1.2) zum Abflammen von Pflanzen mit Flüssiggas, mit einem regelbaren Flüssiggas-Verdampfer (1.5) und einem Flüssiggas-Behälter (1.3), wobei der Flüssiggas-Verdampfer regelbar und mit dem Kühlsystem eines fluidgekühlten Fahrzeugs (1.1) so verbunden ist, daß die Verdunstungswärme für zwangsläufige und regelbare Überführung von Flüssiggas vom flüssigen in den gasförmigen Zustand dem Kühlsystem entnommen wird, die Vorrichtung dazu vorgesehen ist, vom Fahrzeug über mechanische Kopplungsvorrichtungen gezogen oder getragen zu werden, der Verdampfer mit Hilfe von Kopplungen mit dem Kühlsystem verbindbar und davon abkoppelbar ist, sowie ein Thermostat (3.5) und ein Magnetventil (3.6) zur Regelung des Verdampfers vorgesehen sind, wobei das Magnetventil die Versorgung mit Flüssiggas in flüssigem Zustand aus dem Flüssiggas-Behälter zum Wärmtauscher beeinflußt, wenn die Verdampfungs-Temperatur nicht genügend hoch ist.

2. Abflammvorrichtung nach Anspruch 1, dadurch **gekennzeichnet,** daß der besagte Verdampfer (1.5) ein mit dem Kühlsystem (1.9) des Fahrzeuges verbindbarer und davon abkoppelbarer Plattenwärmetauscher (2) ist.

3. Abflammvorrichtung nach Anspruch 2, dadurch **gekennzeichnet,** daß der besagte Verdampfer (1.5) so konzipiert ist, daß das Flüssiggas während des Verdampfens im Wärmetauscher in einer Kurvenform fließt.

4. Abflammvorrichtung nach Anspruch 2 oder 3, dadurch **gekennzeichnet,** daß der Wärmetauscher (2) im Gegenstrom-Prinzip geschaltet ist.

5. Abflammvorrichtung nach Anspruch 1 bis 4, dadurch **gekennzeichnet,** daß ein Thermostat (3.10) und ein Nebenschlußventil (3.9) vorgesehen sind, die verhindern, daß der Wärmetauscher (2) eine einen vorgegebenen Wert übersteigende Temperatur erreicht, indem ein Teil des Kühlfluids des Fahrzeugs (1.1) falls erforderlich am Wärmetauscher (2) vorbeigeleitet wird.

6. Abflammvorrichtung nach einem der Ansprüche 1 bis 5, dadurch **gekennzeichnet,** daß der Verdampfer (1.5) mit einem Träger für den Flüssiggas-Behälter (1.4) zusammengebaut ist.

7. Abflammvorrichtung nach einem oder mehreren der Ansprüche 1 bis 3, dadurch **gekennzeichnet,** daß der Verdampfer (1.5) mit der Abflammvorrichtung (1.2) zusammengebaut ist.

## Revendications

1. Appareil de brûlage (1.2) comportant un évaporateur de gaz de pétrole liquéfié commandable (1.5) et un conteneur de gaz de pétrole liquéfié (1.3), l'évaporateur pouvant être commandé et étant connecté au système de refroidissement d'un véhicule refroidi par un milieu de refroidissement (1.1) de telle sorte que la chaleur d'évaporation destinée à un passage commandable et forcé du gaz de pétrole liquéfié de l'état liquide à l'état gazeux soit extraite du système de refroidissement ;
l'appareil étant conçu pour être remorqué ou supporté par le véhicule au moyen de couplages mécaniques ;
l'évaporateur pouvant être connecté et déconnecté du système de refroidissement au moyen de couplages ;
un thermostat (3.5) et une électrovanne (3.6) étant prévus pour commander l'évaporateur, l'électrovanne agissant pour couper l'alimentation de gaz de pétrole liquéfié à l'état liquide depuis le conteneur de gaz de pétrole liquéfié jusqu'à l'échangeur thermique si la température d'évaporation n'est pas suffisamment élevée.

2. Appareil de brûlage selon la revendication 1, caractérisé en ce que ledit évaporateur (1.5) est un échangeur thermique à plaques (2) qui peut être connecté et déconnecté du système de refroidissement (1.9) dudit véhicule.

3. Appareil de brûlage selon la revendication 2, caractérisé en ce que ledit évaporateur est congru de telle sorte que le gaz de pétrole liquéfié s'écoule à l'intérieur de l'échangeur thermique (2) selon un trajet incurvé tandis qu'il s'évapore.

4. Appareil de brûlage selon la revendication 2 ou 3, caractérisé en ce que ledit échangeur thermique (2) est connecté selon le principe à contre-courant.

5. Appareil de brûlage selon les revendications 1 à 4, caractérisé en ce qu'un thermostat (3.10) et une vanne de dérivation (3.9) sont prévus pour empêcher que l'échangeur thermique (2) n'atteigne une température excédant une valeur limite pré-établie et en ce qu'une partie de l'eau de refroidissement du véhicule (1.1) est amenée à circuler en dehors de l'échangeur thermique (2) lorsque nécessaire.

6. Appareil de brûlage selon l'une quelconque des revendications 1 à 5, caractérisé en ce que ledit évaporateur (1.5) est construit de façon à être associé à un support destiné au conteneur de gaz de pétrole liquéfié (1.4).

7. Appareil de brûlage selon l'une ou plusieurs des revendications 1 à 6, caractérisé en ce que ledit évaporateur (1.5) est construit de façon à être associé audit appareil de brûlage (1.2).
